(19) Europäisches Patentamt
European Patent Office
Office européen des brevets

(11) **EP 4 732 979 A1**

(12) **EUROPEAN PATENT APPLICATION**

(43) Date of publication:
**29.04.2026 Bulletin 2026/18**

(21) Application number: **25205439.0**

(22) Date of filing: **29.09.2025**

(51) International Patent Classification (IPC):
***B23K 9/073*** (2006.01)     ***B23K 9/09*** (2006.01)
***B23K 9/12*** (2006.01)

(52) Cooperative Patent Classification (CPC):
**B23K 9/09; B23K 9/0735; B23K 9/125**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.10.2024 JP 2024174718**

(71) Applicant: **DAIHEN Corporation
Yodogawa-ku
Osaka-shi
Osaka 532-8512 (JP)**

(72) Inventor: **TAKADA, Kento
Osaka-shi, 532-8512 (JP)**

(74) Representative: **Boult Wade Tennant LLP
Salisbury Square House
8 Salisbury Square
London EC4Y 8AP (GB)**

(54) **PULSE ARC WELDING CONTROL METHOD AND PULSE ARC WELDING POWER SUPPLY**

(57)     A method for controlling pulse arc welding includes repeating provisions of welding currents during a peak rise period, a peak period, a peak fall period, and a base period as one pulse cycle, and performing arc length control based on a welding voltage setting value. The feed speed of the welding wire is set to: a forward-feeding peak value during the peak period; a base period forward-feeding value during the base period to generate a short circuit, where the base period forward-feeding value is smaller than the forward-feeding peak value; and a reverse-feeding peak value when the short circuit occurs. The reverse-feeding peak value is maintained after the short circuit is cleared.

FIG.1

EP 4 732 979 A1

**Description**

FIELD

The present disclosure relates to a method for controlling pulse arc welding in which the welding is performed by feeding a welding wire, and to a pulse arc welding power supply.

BACKGROUND

Pulse arc welding in which a welding wire is fed for welding has been used to weld a material such as steel. The pulse arc welding includes feeding a welding wire, providing a peak rise current that rises from the value of a base current to the value of a peak current during a peak rise period, providing the peak current during a peak period, providing a peak fall current that falls from the value of the peak current to the value of the base current during a peak fall period, providing the base current during a base period, and repeating the provision of these welding currents as one pulse cycle to perform welding. The pulse arc welding can reduce spatter and provide a beautiful bead appearance by achieving the state of one pulse cycle-one droplet transfer.

The invention disclosed in Japanese Patent No. 6123069 is configured such that during a predetermined period from a first point in the peak period to a second point in the base period, the feed speed of the welding wire is reduced to be lower than the feed speed at the rise point of the peak current, or the welding wire is fed in reverse, i.e., the direction away from the welding target.

SUMMARY

Pulse arc welding has a drawback in that a short circuit between the welding wire and the base material increases the amount of spatter, which leads to poor welding quality. Accordingly, an object of the present disclosure is to provide a pulse arc welding control method and a pulse arc welding power supply that are capable of achieving excellent welding quality by suppressing an increase in the amount of spatter even when a short circuit occurs between the welding wire and the base material.

According to a first aspect of the present disclosure, there is provided a method for controlling pulse arc welding. The method comprises: feeding a welding wire forward and backward; providing a peak rise current that rises from a value of a base current to a value of a peak current during a peak rise period; providing the peak current during a peak period; providing a peak fall current that falls from the value of the peak current to the value of the base current during a peak fall period; providing the base current during a base period; repeating providing the respective currents as one pulse cycle; and performing arc length control based on a welding voltage setting value. The feed speed of the welding wire is set to: a forward-feeding peak value during the peak period; a base period forward-feeding value during the base period to generate a short circuit, the base period forward-feeding value being smaller than the forward-feeding peak value; and a reverse-feeding peak value when the short circuit occurs, where the reverse-feeding peak value is maintained after the short circuit is cleared.

In an embodiment, the start of the peak rise period is delayed until the short circuit is cleared.

In an embodiment, when the welding voltage setting value is equal to a reference voltage setting value, the base period is set to a reference base period. When the welding voltage setting value is smaller than the reference voltage setting value, the base period is set to be longer than the reference base period. When the welding voltage setting value is larger than the reference voltage setting value, the base period is set to be shorter than the reference base period.

In an embodiment, at least one of the forward-feeding peak value, the base period forward-feeding value and the reverse-feeding peak value is subjected to modulation control such that an average value of the feed speed is set to a predetermined value.

In an embodiment, the value of the base current is smaller during a period of the short circuit than during a period in which an arc is generated.

According to a second aspect of the present disclosure, there is provided a pulse arc welding power supply configured to: feed a welding wire forward and backward; provide a peak rise current that rises from a value of a base current to a value of a peak current during a peak rise period; provide the peak current during a peak period; provide a peak fall current that falls from the value of the peak current to the value of the base current during a peak fall period; provide the base current during a base period; repeat providing the respective currents as one pulse cycle; and perform arc length control based on a welding voltage setting value. The feed speed of the welding wire is set to: a forward-feeding peak value during the peak period; a base period forward-feeding value during the base period to generate a short circuit, where the base period forward-feeding value is smaller than the forward-feeding peak value; a reverse-feeding peak value when the short circuit occurs. The reverse-feeding peak value is maintained after the short circuit is cleared.

According to the configuration described above, the pulse arc welding control method and the pulse arc welding power supply can achieve excellent welding quality by suppressing an increase in the amount of spatter even when a short circuit occurs between the welding wire and the base material.

DRAWINGS

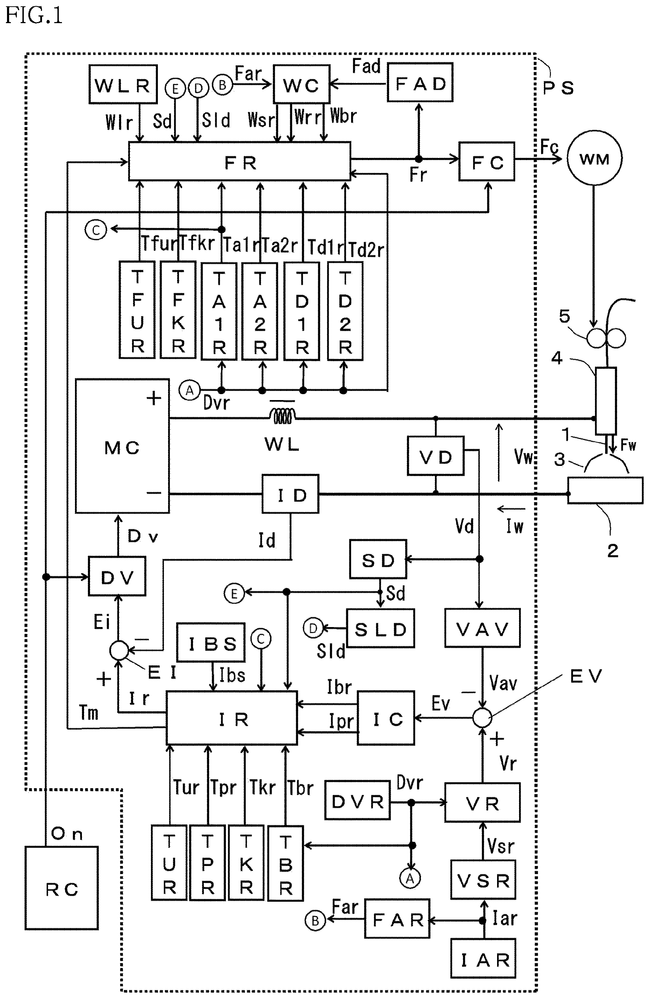

Fig. 1 is a block diagram showing a welding device for performing a method for controlling pulse arc welding according to an embodiment of the present disclosure.

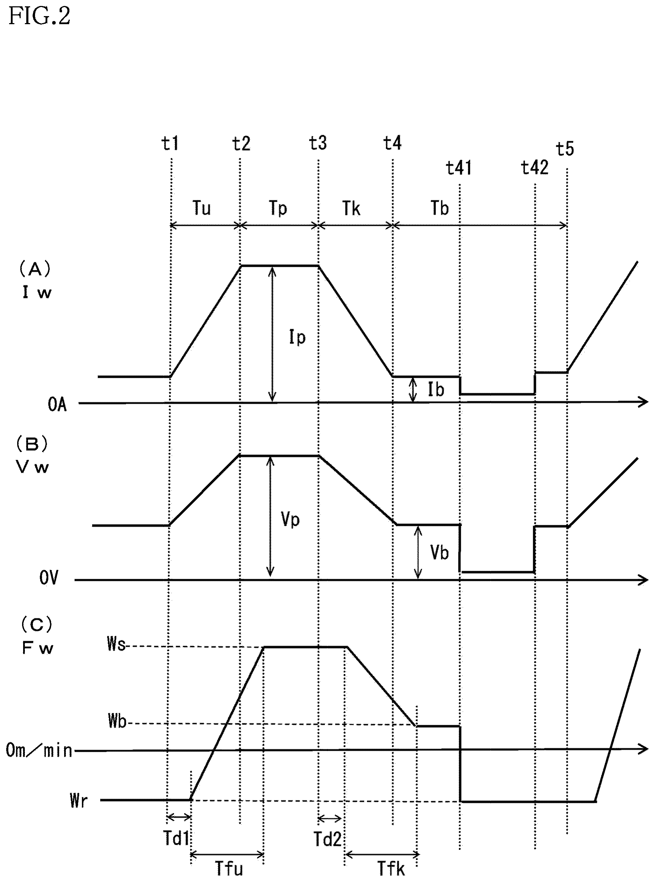

Fig. 2 is a timing chart of each signal in the welding device of Fig. 1, showing the method for controlling pulse arc welding according to the embodiment of the present disclosure, in a case where the value of a welding voltage setting signal Vr is smaller than that of a reference voltage setting signal Vsr.

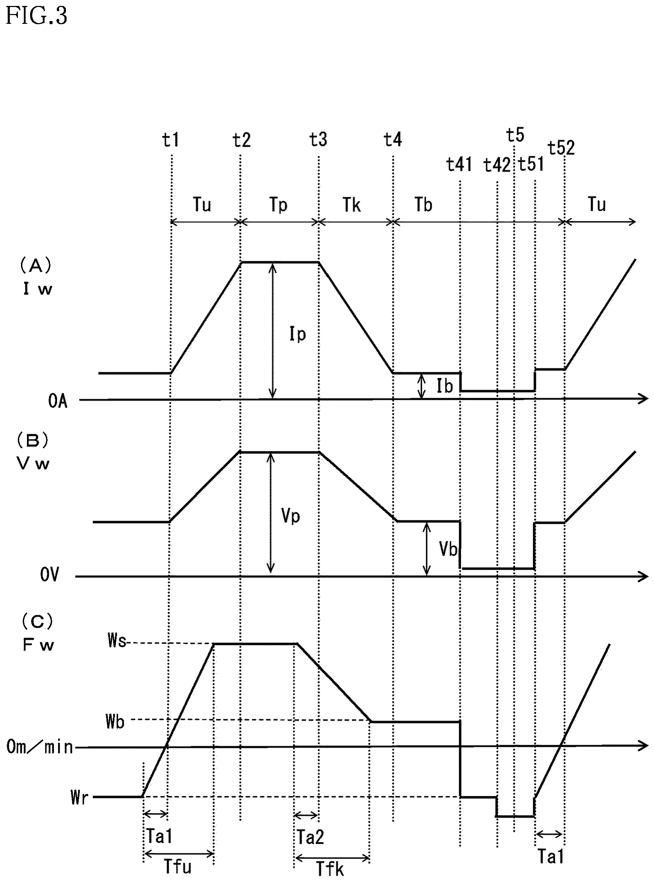

Fig. 3 is a timing chart of each signal in the welding device of Fig. 1, showing the method for controlling pulse arc welding according to the embodiment of the present disclosure, in a case where the value of the welding voltage setting signal Vr is larger than that of the reference voltage setting signal Vsr.

## EMBODIMENTS

Embodiments of the present disclosure will be described below with reference to the drawings.

Fig. 1 is a block diagram showing a welding device for performing a method for controlling pulse arc welding according to an embodiment of the present disclosure. The welding device mainly includes a pulse arc welding power supply PS surrounded by a broken line, a robot control device RC, a robot (not illustrated), and so on. The following describes each block with reference to the figure.

The pulse arc welding power supply PS is made up of the following blocks.

A power control circuit MC receives an AC commercial power source (not illustrated) such as three-phase 200 V as an input, performs output control such as inverter control according to a drive signal Dv described below, and outputs welding voltage Vw and welding current Iw suitable for welding. Although not illustrated, the power control circuit MC includes a primary rectification circuit that rectifies the AC commercial power source, a capacitor that smooths the rectified direct current, an inverter circuit that converts the smoothed direct current into high-frequency alternate current according to the drive signal Dv, an inverter transformer that lowers the voltage of the high-frequency alternate current to a value suitable for welding, and a secondary rectification circuit that rectifies the low-voltage high-frequency alternate current.

A reactor WL is inserted between the + (plus) side output of the power control circuit MC and a welding torch 4, and smooths the output of the power control circuit MC.

A feed motor WM is driven to rotate according to a feed control signal Fc described below. A welding wire 1 is fed forward and backward at a feed speed Fw through the welding torch 4 by the rotation of a feed roll 5 coupled to the feed motor WM, so that an arc 3 is generated between the welding wire 1 and a base material 2. The feed motor WM and the welding torch 4 are mounted on a robot. The welding voltage Vw is applied across a feed tip (not illustrated) in the welding torch 4 and the base material 2 to provide the welding current Iw.

A welding current average value setting circuit IAR outputs a predetermined welding current average value setting signal Iar. A feed speed average value setting circuit FAR outputs a feed speed average value setting signal Far corresponding to the welding current average value setting signal Iar. A reference voltage setting circuit VSR outputs a reference voltage setting signal Vsr for setting an appropriate arc length corresponding to the welding current average value setting signal Iar.

A voltage fine adjustment circuit DVR outputs a predetermined voltage fine adjustment signal Dvr. The value of the voltage fine adjustment signal Dvr is a real number in the range of -5V to +5V, for example. A welding voltage setting circuit VR receives the reference voltage setting signal Vsr and the voltage fine adjustment signal Dvr as inputs, adds the values of these signals, and outputs the welding voltage setting signal Vr. Thus, the welding voltage setting signal Vr is a signal resulting from finely adjusting the value of the reference voltage setting signal Vsr, which is exclusively set based on the welding current average value setting signal Iar, with the voltage fine adjustment signal Dvr.

A welding voltage detection circuit VD detects the welding voltage Vw and outputs a welding voltage detection signal Vd. A welding voltage averaging circuit VAV averages the welding voltage detection signal Vd (passes the signal Vd through a low pass filter) and outputs a welding voltage average value signal Vav. A voltage error amplification circuit EV amplifies the error between the welding voltage setting signal Vr (+) and the welding voltage average value signal Vav (-), and outputs a voltage error amplification signal Ev.

A current modulation circuit IC receives the voltage error amplification signal Ev as an input to perform Proportional-Integral (PI) control or Proportional-Integral-Derivative (PID) control, and outputs a peak current setting signal Ipr and a base current setting signal Ibr. The circuit IC performs current modulation control on the peak current setting signal Ipr and the base current setting signal Ibr so that the welding voltage average value signal Vav will be equal to the welding voltage setting signal Vr. As a result, arc length control is performed such that the arc length is maintained at an appropriate value. It is possible to perform current modulation control on only the peak current setting signal Ipr and set the base current setting signal Ibr to a predetermined value.

A short-circuit determination circuit SD receives the welding voltage detection signal Vd as an input. When the value of the welding voltage detection signal Vd is smaller than a short-circuit determination value (approximately 10 V), the short-circuit determination circuit SD determines that it is a short-circuit period, and outputs a short-circuit determination signal Sd at High level. When the value of the welding voltage detection signal Vd is at least the short-circuit determination value, the short-circuit determination circuit SD determines that it is in an arc generation period, and outputs the short-circuit determination signal Sd at Low level.

A short-circuit period base current setting circuit IBS outputs a predetermined short-circuit period base current setting signal Ibs. The value of the short-circuit period base current setting signal Ibs is set to be no greater than the value of the base current setting signal Ibr during the arc generation period, and may be in the range of 30 to 50 A.

A peak rise period setting circuit TUR outputs a predetermined peak rise period setting signal Tur. A peak period setting circuit TPR outputs a predetermined peak period setting signal Tpr. A peak fall period setting circuit TKR outputs a predetermined peak fall period setting signal Tkr.

A base period setting circuit TBR receives the voltage fine adjustment signal Dvr as an input, performs an operation with the following formula, and outputs a base period setting signal Tbr. Thus, when the value of the welding voltage setting signal Vr is equal to the value of the reference voltage setting signal Vsr, the value of the base period setting signal Tbr is set to a reference base period. When the value of the welding voltage setting signal Vr is smaller than the value of the reference voltage setting signal Vsr, the value of the base period setting signal Tbr is set to be shorter than the reference base period. When the value of the welding voltage setting signal Vr is larger than the value of the reference voltage setting signal Vsr, the value of the base period setting signal Tbr is set to be longer than the reference base period.

$$\text{Tbr} = (\text{reference base period}) + \text{Dvr} \times \text{K}$$

Note that K is a constant. For example, when Dvr < 0, K = -0.4, and when Dvr > 0, K = -0.2. Suppose that the reference base period is 3 ms. In this case, when Dvr = -5 V, Tbr = 5 ms, and when Dvr = +5 V, Tbr = 2 ms.

A welding current setting circuit IR receives a first early period setting signal Talr (described below), the short-circuit determination signal Sd, the short-circuit period base current setting signal Ibs, the peak rise period setting signal Tur, the peak period setting signal Tpr, the peak fall period setting signal Tkr, the base period setting signal Tbr, the peak current setting signal Ipr, and the base current setting signal Ibr as inputs, performs the following process, and outputs a welding current setting signal Ir and a timer signal Tm.

(1) During a peak rise period Tu defined by the peak rise period setting signal Tur, output the timer signal Tm = 1, and output, as the welding current setting signal Ir, a peak rise current Iu that rises from the value of the base current setting signal Ibr to the value of the peak current setting signal Ipr.

(2) Then, during a peak period Tp defined by the peak period setting signal Tpr, output the timer signal Tm = 2, and output the peak current setting signal Ipr as the welding current setting signal Ir.

(3) Then, during a peak fall period Tk defined by the peak fall period setting signal Tkr, output the timer signal Tm = 3, and output, as the welding current setting signal Ir, a peak fall current Ik that falls from the value of the peak current setting signal Ipr to the value of the base current setting signal Ibr.

(4) Next, during a base period Tb defined by the base period setting signal Tbr, output the timer signal Tm = 4, and output the welding current setting signal Ir that takes the value of the base current setting signal Ibr when the short-circuit determination signal Sd is at Low level (the arc generation period), and that takes the value of the short-circuit period base current setting signal Ibs when the short-circuit determination signal Sd is at High level (the short-circuit period). However, extend the base period Tb until the period defined by the first early period setting signal Talr elapses from the point at which the short-circuit determination signal Sd is changed from High level (the short-circuit period) to Low level (the arc generation period).

(5) Repeat the above steps (1) to (4).

A feed speed modulation circuit WC receives the feed speed average value setting signal Far and a feed speed average value detection signal Fad (described below) as inputs, performs modulation control based on the error amplification signal between the values of these signals, and outputs a forward-feeding peak value setting signal Wsr, a base period forward-feeding value setting signal Wbr, and a reverse-feeding peak value setting signal Wrr. This circuit performs modulation control so that the value of the feed speed average value detection signal Fad becomes equal to the value of the feed speed average value setting signal Far. Alternatively, the modulation control may be performed on at least one of the forward-feeding peak value setting signal Wsr, the base period forward-feeding value setting signal Wbr, or the reverse-feeding peak value setting signal Wrr.

A welding current detection circuit ID detects the welding current Iw, and outputs a welding current detection signal Id. A current error amplification circuit EI amplifies the error between the welding current setting signal Ir (+) and the welding current detection signal Id (-), and outputs a current error amplification signal Ei. A drive circuit DV receives the current error amplification signal Ei and an activation signal On from the robot control device RC (described below) as inputs. When the activation signal On is at High level (the start of welding), the drive circuit DV performs, for example, pulse width modulation control based on the current error amplification signal Ei, and outputs the drive signal Dv for driving the inverter circuit in the power control circuit MC. When the activation signal On is at Low level (the stop of welding), the drive circuit DV does not output the drive signal Dv.

A first delay period setting circuit TD1R receives the voltage fine adjustment signal Dvr as an input, performs the operation of Td1r [ms] = |Dvr| × 0.1, and outputs a first delay period setting signal Td1r. Thus, the value of the first delay period setting signal Td1r increases as the absolute value of the difference (the voltage fine adjustment signal Dvr) between the value of the welding voltage setting signal Vr and the value of the reference voltage setting signal Vsr becomes larger. For example, when Dvr = -1 V, Td1r = 0.1 ms, and when Dvr = -5 V, Td1r = 0.5 ms.

A second delay period setting circuit TD2R receives the voltage fine adjustment signal Dvr as an input, performs the operation of Td2r [ms] = |Dvr| × 0.1, and outputs a second delay period setting signal Td2r. Thus, the value of the second delay period setting signal Td2r increases as the absolute value of the difference (the voltage fine adjustment signal Dvr) between the value of the welding voltage setting signal Vr and the value of the reference voltage setting signal Vsr becomes larger. Here, Td2r = Td1r; however, the these values may be set to different values.

A first early period setting circuit TA1R receives the voltage fine adjustment signal Dvr as an input, performs the operation of Ta1r [ms] = |Dvr| × 0.2, and outputs the first early period setting signal Ta1r. Thus, the value of the first early period setting signal Ta1r increases as the absolute value of the difference (the voltage fine adjustment signal Dvr) between the value of the welding voltage setting signal Vr and the value of the reference voltage setting signal Vsr becomes larger. For example, when Dvr = +1 V, Ta1r = 0.2 ms, and when Dvr = +5 V, Ta1r = 1.0 ms.

A second early period setting circuit TA2R receives the voltage fine adjustment signal Dvr as an input, performs the operation of Ta2r [ms] = |Dvr| × 0.2, and outputs a second early period setting signal Ta2r. Thus, the value of the second early period setting signal Ta2r increases as the absolute value of the difference (the voltage fine adjustment signal Dvr) between the value of the welding voltage setting signal Vr and the value of the reference voltage setting signal Vsr becomes larger. Here, Ta2r = Ta1r; however, the these values may be set to different values.

A feed speed rise period setting circuit TFUR outputs a predetermined feed speed rise period setting signal Tfur. It is desirable that the feed speed rise period setting signal Tfur be shorter than the peak rise period setting signal Tur.

A feed speed fall period setting circuit TFKR outputs a predetermined feed speed fall period setting signal Tfkr. It is desirable that the feed speed fall period setting signal Tfkr be shorter than the peak fall period setting signal Tkr.

A long short-circuit determination circuit SLD receives the short-circuit determination signal Sd as an input, and outputs a long short-circuit determination signal Sld. The long short-circuit determination signal Sld changes to High level when a long short-circuit determination value (approximately 5 ms) has been reached since the short-circuit determination signal Sd changed to High level. The long short-circuit determination signal Sld changes to Low level when the short-circuit determination signal Sd subsequently changes to Low level. Thus, the long short-circuit determination signal Sld is a signal that remains at High level during the period when the short-circuit period is longer than or equal to the long short-circuit determination value.

A long short-circuit reverse-feeding peak value setting circuit WLR outputs a predetermined long short-circuit reverse-feeding peak value setting signal Wlr. The long short-circuit reverse-feeding peak value setting signal Wlr has a negative value, and its absolute value is larger than that of the reverse-feeding peak value setting signal Wrr.

A feed speed setting circuit FR receives the short-circuit determination signal Sd, the long short-circuit determination signal Sld, the long short-circuit reverse-feeding peak value setting signal Wlr, the voltage fine adjustment signal Dvr, the forward-feeding peak value setting signal Wsr, base period forward-feeding value setting signal Wbr, the reverse-feeding peak value setting signal Wrr, the timer signal Tm, the feed speed rise period setting signal Tfur, the feed speed fall period setting signal Tfkr, the first delay period setting signal Td1r, the second delay period setting signal Td2r, the first early period setting signal Ta1r, and the second early period setting signal Ta2r as inputs, performs the following process, and outputs a feed speed setting signal Fr.

1. When the voltage fine adjustment signal Dvr ≤ 0

(1) The feed speed setting signal Fr starts to change from the value of the reverse-feeding peak value setting signal Wrr at the time when the period of the first delay period setting signal Td1r has elapsed since the timer signal Tm changed to 1 (the peak rise period), and changes to the value of the forward-feeding peak value setting signal Wsr during the period defined by the feed speed rise period setting signal Tfur and maintains the value.

(2) The feed speed setting signal Fr starts to change from the value of the forward-feeding peak value setting signal Wsr at the time when the period of the second delay period setting signal Td2r has elapsed since the timer signal Tm changed to 3 (the peak fall period), and changes to the value of the base period forward-feeding value setting signal Wbr during the period defined by the feed speed fall period setting signal Tfkr, and maintains the value during the period when the timer signal Tm = 4 (base period).

(3) The feed speed setting signal Fr takes the value of the reverse-feeding peak value setting signal Wrr when the short-circuit determination signal Sd changes to High level (a short circuit), and maintains the value even after the short circuit is cleared. However, the feed speed setting signal Fr switches to the long short-circuit reverse-feeding peak value setting signal Wlr instead of the reverse-feeding peak value setting signal Wrr during the period when the long short-circuit determination signal Sld is at High level.

2. When the voltage fine adjustment signal Dvr > 0

(1) The feed speed setting signal Fr starts to change from the value of the reverse-feeding peak value setting signal Wrr when the period of (Tbr - Talr) has elapsed since the timer signal Tm changed to 4 (the base period), and when the short-circuit determination signal Sd is at Low level (the arc generation period), and changes to the value of the forward-feeding peak value setting signal Wsr during the period defined by the feed speed rise period setting signal Tfur and maintains the value.

(2) The feed speed setting signal Fr starts to change from the value of the forward-feeding peak value setting signal Wsr at the time when the period of (Tpr - Ta2r) has elapsed since the timer signal Tm changed to 2 (the peak period), and changes to the value of the base period forward-feeding value setting signal Wbr during the period defined by the feed speed fall period setting signal Tfkr, and maintains the value during the period when the timer signal Tm = 4 (the base period).

(3) The feed speed setting signal Fr takes the value of the reverse-feeding peak value setting signal Wrr when the short-circuit determination signal Sd changes to High level (a short circuit), and holds the value until the timer signal Tm = 4 (the base period) ends. The feed speed setting signal Fr maintains the value even after the short circuit is cleared. However, the feed speed setting signal Fr switches to the long short-circuit reverse-feeding peak value setting signal Wlr instead of the reverse-feeding peak value setting signal Wrr during the period when the long short-circuit determination signal Sld is at High level.

A feed speed average value detection circuit FAD receives the feed speed setting signal Fr as an input, calculates an average value, and outputs the feed speed average value detection signal Fad. Alternatively, the feed speed average value detection circuit FAD may directly detect the feed speed Fw instead of using the feed speed setting signal Fr, and may calculate an average value.

A feed control circuit FC receives the feed speed setting signal Fr and the activation signal On from the robot control device RC (described below) as inputs. When the activation signal On is at High level (the start of welding), the feed control circuit FC outputs, to the feed motor WM, the feed control signal Fc for feeding the welding wire 1 at the value of the feed speed setting signal Fr. When the activation signal On is at Low level, the feed control circuit FC outputs, to the feed motor WM, the feed control signal Fc for stopping feeding.

The robot control device RC moves a robot (not illustrated) according to a pre-instructed operation program, and outputs the activation signal On that commands either the start of welding or the stop of welding.

Fig. 2 is a timing chart of each signal in the welding device of Fig. 1, showing a method for controlling pulse arc welding according to the embodiment of the present disclosure. Fig. 2 shows the case where the value of the welding voltage setting signal Vr in Fig. 1 is smaller than that of the reference voltage setting signal Vsr in Fig. 1. In the figure, (A) shows the change of the welding current Iw over time, (B) shows the change of the welding voltage Vw over time, and (C) shows the change of the feed speed Fw of the welding wire over time. The operation of each signal will be described below with reference to the figure.

In Fig. 2, the value of the voltage fine adjustment signal Dvr in Fig. 1 is set to a negative value; therefore, the value of the welding voltage setting signal Vr in Fig. 1 is smaller than the value of the reference voltage setting signal Vsr in Fig. 1. When the value of the welding voltage setting signal Vr is equal to the value of the reference voltage setting signal Vsr, the arc length is adjusted to an appropriate value. When welding is performed at a welding speed that exceeds 1 m/min, the arc length is set to be shorter than the appropriate value to improve the welding quality. In this case, the value of the welding voltage setting signal Vr is set to be smaller than the value of the reference voltage setting signal Vsr.

When the feed speed Fw shown in (C) of Fig. 2 takes a positive value above zero, the welding device is in a forward-feeding state where the welding wire is fed forward in a direction toward the base material. When the feed speed Fw takes a negative value below zero, the welding device is in a reverse-feeding state where the welding wire is fed backward in a direction away from the base material.

During the peak rise period Tu, which is the predetermined period from time t1 to t2, the peak rise current Iu that rises from a base current Ib subjected to current modulation control to a peak current Ip subjected to current modulation control is provided as shown in (A) in Fig. 2, and a peak rise voltage that rises from a base voltage Vb to a peak voltage Vp is applied across the welding wire and the base material as shown in (B) in Fig. 2.

As shown in (C) in Fig. 2, the feed speed Fw starts to change from a reverse-feeding peak value Wr at the time when a first delay period Td1 has elapsed since the start of the peak rise period Tu at time t1. Then, the feed speed Fw keeps changing during a feed speed rise period Tfu, and reaches a forward-feeding peak value Ws at the time later than the end of the peak rise period Tu at time t2. The feed speed rise period Tfu is set to be no longer than the peak rise period Tu. The peak rise period Tu is set by the peak rise period setting signal Tur shown in Fig. 1. The base current Ib is set by the base current setting signal Ibr in Fig. 1. The peak current Ip is set by the peak current setting signal Ipr in Fig. 1. The reverse-feeding peak value Wr is set by the reverse-feeding peak value setting signal Wrr in Fig. 1. The forward-feeding peak value Ws is set by the forward-feeding peak value setting signal Wsr in Fig. 1. The first delay period Td1 is set by the first delay period setting signal Td1r in Fig. 1. The feed speed rise period Tfu is set by the feed speed rise period setting signal Tfur in Fig. 1.

During the peak period Tp, which is the predetermined period from time t2 to t3, the peak current Ip subjected to current modulation control is provided as shown in (A) in Fig. 2, and the peak voltage Vp is applied across the welding wire and the base material as shown in (B) in Fig. 2. The peak period Tp is set by the peak period setting signal Tpr in Fig. 1.

During the peak fall period Tk, which is the predetermined period from time t3 to t4, the peak fall current Ik that falls from the peak current Ip subjected to current modulation control to the base current Ib subjected to current modulation control is provided as shown in (A) in Fig. 2, and a peak fall voltage that falls from the peak voltage Vp to the base voltage Vb is applied across the welding wire and the base material as shown in (B) in Fig. 2. As shown in (C) in Fig. 2, the feed speed Fw starts to change from the forward-feeding peak value Ws at the time when a second delay period Td2 has elapsed since the start of the peak fall period Tk at time t3. Then, the feed speed Fw keeps changing during a feed speed fall period Tfk, and reaches a base period forward-feeding value Wb at the time later than the end of the peak fall period Tk at time t4. The feed speed fall period Tfk is set to be no longer than the peak fall period Tk. The base period forward-feeding value Wb is set to be smaller than the forward-feeding peak value Ws. The peak fall period Tk is set by the peak fall period setting signal Tkr shown in Fig. 1. The second delay period Td2 is set by the second delay period setting signal Td2r shown in Fig. 1. The feed speed fall period Tfk is set by the feed speed fall period setting signal Tfkr shown in Fig. 1. The base period forward-feeding value Wb is set by the base period forward-feeding value setting signal Wbr shown in Fig. 1.

During the base period Tb, which is the predetermined period from time t4 to t5, the base current Ib subjected to current modulation control is provided as shown in (A) in Fig. 2, and the base voltage Vb is applied across the welding wire and the base material as shown in (B) in Fig. 2. As shown in (C) in Fig. 2, the feed speed Fw is the base period forward-feeding value Wb. The base period Tb is set by the base period setting signal Tbr shown in Fig. 1.

When a short circuit occurs between the welding wire and the base material at time t41 during the base period Tb, the welding voltage Vw rapidly decreases to a short-circuit voltage value of several volts as shown in (B) in Fig. 2, and the short-circuit determination signal Sd in Fig. 1 changes to High level. In response, as shown in (A) in Fig. 2, the base current Ib decreases to the value defined by the short-circuit period base current setting signal Ibs (approximately 30 to 50A) shown in Fig. 1. As shown in (C) in Fig. 2, the feed speed Fw changes to the reverse-feeding peak value Wr when a short circuit occurs at time t41, and maintains the value until the start point of the next cycle. When a short circuit is cleared and an arc is regenerated at time t42, the welding voltage Vw rapidly increases to an arc voltage value of several tens of volts as shown in (B) in Fig. 2, and the short-circuit determination signal Sd in Fig. 1 changes to Low level. In response, as shown in (A) in Fig. 2, the base current Ib increases to the value defined by the base current setting signal Ibr. On the other hand, as shown in (C) in Fig. 2, the feed speed Fw maintains the reverse-feeding peak value Wr. The value of the base current Ib when a short circuit is cleared at time t42 is a small value defined by the short-circuit period base current setting signal Ibs. For this reason, the occurrence of spatter associated with the clearance of the short circuit is greatly reduced.

Although not illustrated, when the short-circuit period is longer than or equal to the predetermined long short-circuit determination value (approximately 5 ms), the long short-circuit determination signal Sld in Fig. 1 changes to High level. In response, the feed speed Fw is accelerated to reach the value defined by the long short-circuit reverse-feeding peak value setting signal Wlr in Fig.1. When the short-circuit period is in a long short-circuit state, it is arranged that the reverse-feeding peak value is attained quickly so as to facilitate the clearance of the short circuit.

Each of the first delay period Td1 and the second delay period Td2 takes a larger value as the absolute value of the difference (the voltage fine adjustment signal Dvr) between the value of the welding voltage setting signal Vr and the value of the reference voltage setting signal Vsr increases, and may be in the range of 0.1 to 0.5 ms, for example. The base period Tb is set to be shorter as the value of the welding voltage setting signal Vr increases, and may be in the range of 2 to 5 ms, for example. The period of the base period forward-feeding value Wb and the period of the reverse-feeding peak value Wr vary depending on the timing at which a short circuit occurs. When the value of the welding voltage setting signal Vr changes, the first delay period Td1, the second delay period Td2, and the base period Tb change. Further, when the short-circuit period is in the long short-circuit state, the timing of reaching the reverse-feeding peak value is advanced. Due to these factors, the average value of the feed speed Fw changes. When the average value of the feed speed Fw changes, the bead appearance, the penetration depth, etc., vary, thereby deteriorating the welding quality. In order to prevent this, according to the present embodiment, at least one of the forward-feeding peak value Ws, the base period forward-feeding value Wb, or the reverse-feeding peak value Wr is subjected to modulation control, so that the value of the feed speed average value detection signal Fad in Fig. 1 is equal to the value of the feed speed average value setting signal Far in Fig. 1. As a result, the average value of the feed speed Fw is always controlled to be a predetermined value.

Fig. 3 is a timing chart of each signal in the welding device of Fig. 1, showing a method for controlling pulse arc welding according to the embodiment of the present disclosure. Fig. 3 shows the case where the value of the welding voltage setting signal Vr in Fig. 1 is larger than that of the reference voltage setting signal Vsr in Fig. 1. In the figure, (A) shows the change of the welding current Iw over time, (B) shows the change of the welding voltage Vw over time, and (C) shows the change of the feed speed Fw of the welding wire over time. The operation of each signal will be described below with reference to the figure.

In Fig. 3, the value of the voltage fine adjustment signal Dvr in Fig. 1 is set to a positive value; therefore, the value of the welding voltage setting signal Vr in Fig. 1 is larger than the value of the reference voltage setting signal Vsr in Fig. 1. When the value of the welding voltage setting signal Vr is equal to the value of the reference voltage setting signal Vsr, the arc length is adjusted to an appropriate value. Depending on the joint shape of the base material, welding may be performed by setting the arc length to be longer than the appropriate value in order to improve the welding quality. In this case, the value of the welding voltage setting signal Vr is set to be larger than the value of the reference voltage setting signal Vsr.

When the feed speed Fw shown in (C) of Fig. 3 takes a positive value above zero, the welding device is in a forward-feeding state where the welding wire is fed forward in a direction toward the base material. When the feed speed Fw takes a negative value below zero, the welding device is in a reverse-feeding state where the welding wire is fed backward in a direction away from the base material.

During the peak rise period Tu, which is the predetermined period from time t1 to t2, the peak rise current Iu that rises from the base current Ib subjected to current modulation control to the peak current Ip subjected to current modulation control is provided as shown in (A) in Fig. 3, and the peak rise voltage that rises from the base voltage Vb to the peak voltage Vp is applied across the welding wire and the base material as shown in (B) in Fig. 3.

As shown in (C) in Fig. 3, the feed speed Fw starts to change from the reverse-feeding peak value Wr at the time earlier than the start point of the peak rise period Tu at time t1 by a first early period Ta1. Then, the feed speed Fw keeps changing during the feed speed rise period Tfu, and reaches the forward-feeding peak value Ws at the time earlier than the end of the peak rise period Tu at time t2. The feed speed Fw reaches the forward-feeding peak value Ws before time t2 because the feed speed rise period Tfu is set to be shorter than or equal to the peak rise period Tu. The peak rise period Tu is set by the peak rise period setting signal Tur shown in Fig. 1. The base current Ib is set by the base current setting signal Ibr in Fig. 1. The peak current Ip is set by the peak current setting signal Ipr in Fig. 1. The reverse-feeding peak value Wr is set by the reverse-feeding peak value setting signal Wrr in Fig. 1. The forward-feeding peak value Ws is set by the forward-feeding peak value setting signal Wsr in Fig. 1. The first early period Ta1 is set by the first early period setting signal Ta1r in Fig. 1. The feed speed rise period Tfu is set by the feed speed rise period setting signal Tfur in Fig. 1.

During the peak period Tp, which is the predetermined period from time t2 to t3, the peak current Ip subjected to current modulation control is provided as shown in (A) in Fig. 3, and the peak voltage Vp is applied across the welding wire and the base material as shown in (B) in Fig. 3. The peak period Tp is set by the peak period setting signal Tpr in Fig. 1.

During the peak fall period Tk, which is the predetermined period from time t3 to t4, the peak fall current Ik that falls from the peak current Ip subjected to current modulation control to the base current Ib subjected to current modulation control is provided as shown in (A) in Fig. 3, and the peak fall voltage that falls from the peak voltage Vp to the base voltage Vb is applied across the welding wire and the base material as shown in (B) in Fig. 3. As shown in (C) in Fig. 3, the feed speed Fw starts to change from the forward-feeding peak value Ws at the time earlier than the start of the peak fall period Tk at time t3 by a second early period Ta2. Then, the feed speed Fw keeps changing during the feed speed fall period Tfk, and reaches the base period forward-feeding value Wb at the time earlier than the end of the peak fall period Tk at time t4. The feed speed Fw reaches the base period forward-feeding value Wb before time t4 because the feed speed fall period Tfk is set to be shorter than or equal to the peak fall period Tk. The base period forward-feeding value Wb is set to be smaller than the forward-feeding peak value Ws. The peak fall period Tk is set by the peak fall period setting signal Tkr shown in Fig. 1. The second early period Ta2 is set by the second early period setting signal Ta2r in Fig. 1. The feed speed fall period Tfk is set by the feed speed fall period setting signal Tfkr shown in Fig. 1. The base period forward-feeding value Wb is set by the base period forward-feeding value setting signal Wbr shown in Fig. 1.

During the base period Tb, which is the predetermined period from time t4 to t5, the base current Ib subjected to current modulation control is provided as shown in (A) in Fig. 3, and the base voltage Vb is applied across the welding wire and the base material as shown in (B) in Fig. 3. As shown in (C) in Fig. 3, the feed speed Fw has the base period forward-feeding value Wb. The base period Tb is set by the base period setting signal Tbr shown in Fig. 1.

When a short circuit occurs between the welding wire and the base material at time t41 just before the end of the base period Tb, the welding voltage Vw rapidly decreases to a short-circuit voltage value of several volts as shown in (B) in Fig. 3, and the short-circuit determination signal Sd in Fig. 1 changes to High level. In response, as shown in (A) in Fig. 3, the base current Ib decreases to the value defined by the short-circuit period base current setting signal Ibs shown in Fig. 1. As shown in (C) in Fig. 3, the feed speed Fw changes to the reverse-feeding peak value Wr. Further, when the short-circuit period is longer than or equal to the predetermined long short-circuit determination value (approximately 5 ms) at time t42, the long short-circuit determination signal Sld in Fig. 1 changes to High level. In response, the feed speed Fw is accelerated to reach the value defined by the long short-circuit reverse-feeding peak value setting signal Wlr in Fig. 1. When the short-circuit period is in the long short-circuit state, it is arranged that the timing of reaching the reverse-feeding peak value Wr is advanced to facilitate the clearance of the short circuit.

The short-circuit period continues even after the period defined by the base period setting signal Tbr ends at time t5; therefore, the base period Tb is extended. When a short circuit is cleared and an arc is regenerated at time t51, the welding voltage Vw rapidly increases to an arc voltage value of several tens of volts as shown in (B) in Fig. 3, and the short-circuit determination signal Sd and the long short-circuit determination signal Sld in Fig. 1 change to Low level. The value of the base current Ib when a short circuit is cleared is a small value defined by the short-circuit period base current setting signal Ibs. For this reason, the occurrence of spatter associated with the clearance of the short circuit is greatly reduced. When an arc is regenerated, the base current Ib increases to the value defined by the base current setting signal Ibr, as shown in (A) in Fig. 3. As shown in (C) in Fig. 3, the feed speed Fw starts to change from the reverse-feeding peak value Wr to the forward-feeding peak value Ws. At time t52, which is the time after the first early period Ta1 has elapsed since time t51, the welding process transitions to the peak rise period Tu. Thereafter, the above-described operations are repeated.

Each of the first early period Ta1 and the second early period Ta2 takes a larger value as the absolute value of the difference (the voltage fine adjustment signal Dvr) between the value of the welding voltage setting signal Vr and the value of the reference voltage setting signal Vsr increases, and may be in the range of 0.2 to 1.0 ms, for example. The base period Tb is set to be shorter as the value of the welding voltage setting signal Vr increases, and may be in the range of 2 to 5 ms, for example. The period of the base period forward-feeding value Wb and the period of the reverse-feeding peak value Wr vary depending on the timing at which a short circuit occurs. When the value of the welding voltage setting signal Vr changes, the first early period Ta1, the second early period Ta2, and the base period Tb change. Further, when the short-circuit period is in the long short-circuit state, the timing of reaching the reverse-feeding peak value is advanced, and when the short-circuit period continues at the end of the base period Tb, the base period Tb is extended. Due to these factors, the average value of the feed speed Fw changes. When the average value of the feed speed Fw changes, the bead appearance, the penetration depth, etc., vary, thereby deteriorating the welding quality. In order to prevent this, according to the present embodiment, at least one of the forward-feeding peak value Ws, the base period forward-feeding value Wb, or the reverse-feeding peak value Wr is subjected to modulation control, so that the value of the feed speed average value detection signal Fad in Fig. 1 is equal to the value of the feed speed average value setting signal Far in Fig. 1. As a result, the average value of the feed speed Fw is always controlled to be a predetermined value.

Numerical examples of the parameters described above will be given below. Tu = 1 ms, Tp = 1 ms, Tk = 1 ms, Ip = 350 to 450 A, Ib = 50 to 150 A, Ws = 50 m/min, Wb = 20 m/min, Wr = -30 m/min, Tfu = 0.8 ms, Tfk = 0.8 ms

The following describes the advantages of the present embodiment. According to the present embodiment, the method for controlling pulse arc welding includes: feeding a welding wire forward and backward; providing a peak rise current that rises from the value of a base current to the value of a peak current during a peak rise period; providing the peak current during a peak period; providing a peak fall current that falls from the value of the peak current to the value of the base current during a peak fall period; providing the base current during a base period; repeating the provision of the welding currents as one pulse cycle; and performing arc length control based on a welding voltage setting value to perform welding. In this method, the feed speed of the welding wire is set to a forward-feeding peak value during the peak period. During the base period, the feed speed is set to a base period forward-feeding value, which is smaller than the forward-feeding peak value, so as to generate a short circuit. When a short circuit is generated, the feed speed is set to a reverse-feeding peak value, and the reverse-feeding peak value is maintained even after the short circuit is cleared. According to the present embodiment, during the peak period, a peak current greater than or equal to a critical current value is provided, and the feed speed is set to the forward-feeding peak value to form a droplet of an appropriate size. During the subsequent base period, a base current below the critical current value is provided, and the feed speed is set to the base period forward-feeding value to generate a short circuit between a droplet and a molten pool.

When a short circuit occurs, the short circuit is quickly cleared by providing the base current and setting the feed speed to the reverse-feeding peak value. Even after the short circuit is cleared, the base current is provided and the feed speed is maintained at the reverse-feeding peak value to increase the arc length and prevent the recurrence of a short circuit. In the present embodiment, the feed speed is set to the reverse-feeding peak value during a short circuit. Thus, even if the current value is small during the short circuit, the short circuit can be reliably and quickly cleared with little spatter. As a result, the present embodiment enables stable pulse arc welding with periodic short circuits by repeating the above process.

More preferably, according to the present embodiment, the start of the peak rise period is delayed until the short circuit is cleared. In some cases, a short circuit generated during the base period continues even at the end of the base period, and the short circuit is cleared during the peak rise period or the peak period in the next cycle, causing an arc to be regenerated. In such cases, the arc is regenerated at a high welding current, resulting in an increase in the amount of spatter. In the present embodiment, the start of the peak rise period in the next cycle is delayed until the short circuit generated during the base period is cleared. As a result, even when a short circuit is not cleared by the end of the base period, the welding quality can be maintained at a high level by reducing the amount of spatter.

More preferably, according to the present embodiment, when the welding voltage setting value is equal to a reference voltage setting value, the base period is set to a reference base period; when the welding voltage setting value is smaller than the reference voltage setting value, the base period is set to be longer than the reference base period; and when the welding voltage setting value is larger than the reference voltage setting value, the base period is set to be shorter than the reference base period. When the welding voltage setting value is smaller than the reference voltage setting value, the short circuit may persist into the next cycle due to a short arc length, making the welding state unstable. Thus, according to the present embodiment, the base period is extended to prevent the short circuit to persist into the next cycle. When the welding voltage setting value is larger than the reference voltage setting value, a long base period may cause magnetic blow, which tends to make the welding state unstable. Thus, according to the present embodiment, the base period is shortened to suppress the occurrence of magnetic blow.

More preferably, according to the present embodiment, at least one of the forward-feeding peak value, the base period forward-feeding value, or the reverse-feeding peak value is subjected to modulation control such that the average value of the feed speed is set to a predetermined value. According to the present embodiment, the period in which the feed speed is set to the base period forward-feeding value and the period in which the feed speed is set to the reverse-feeding peak value vary depending on the timing of the occurrence of a short circuit during the base period, causing a change in the average value of the feed speed. When the average value of the feed speed changes, the bead appearance, the penetration depth, etc., vary, thereby deteriorating the welding quality. According to the present embodiment, at least one of the forward-feeding peak value, the base period forward-feeding value, or the reverse-feeding peak value is subjected to modulation control such that the average value of the feed speed is set to a predetermined value, which makes it possible to maintain the welding quality at a high level at all times.

More preferably, according to the present embodiment, the value of the base current is smaller during a period of the short circuit than during a period in which an arc is generated. When the value of the base current is smaller during the period of the short circuit than during the period in which the arc is generated, the current value at the time of regenerating an arc becomes small, which makes it possible to further reduce the amount of spatter.

According to the present embodiment, the pulse arc welding power supply sets the feed speed of the welding wire to the forward-feeding peak value during the peak period, sets the feed speed to the base period forward-feeding value, which is smaller than the forward-feeding peak value, during the base period, so as to generate a short circuit, sets the feed speed to the reverse-feeding peak value when a short circuit occurs, and maintains the reverse-feeding peak value even after the short circuit is cleared. The pulse arc welding power supply according to the present embodiment has the advantages described above.

More preferably, according to the present embodiment, the timing of reaching the reverse-feeding peak value is advanced when the short circuit period is longer than or equal to the reference value. When the short circuit period is longer than or equal to the reference value, resulting in the occurrence of a long short circuit, the welding state becomes unstable. According to the present embodiment, when the short-circuit period is in a long short-circuit state, the timing of reaching the reverse-feeding peak value is advanced to facilitate the clearance of the short circuit. As a result, the present embodiment can suppress instability of the welding state caused by the long short circuit.

More preferably, according to the present embodiment, when the welding voltage setting value is smaller than the reference voltage setting value, the feed speed of the welding wire starts to change from the reverse-feeding peak value to the forward-feeding peak value at the time when a first delay period has elapsed since the start of the peak rise period, and starts to change from the forward-feeding peak value to the base period forward-feeding value at the time when a second delay period has elapsed since the start of the peak fall period. When the welding voltage setting value is smaller than the reference voltage setting value, a short circuit may occur during the peak period or the peak fall period due to a short arc length. In such a case, a short circuit occurs while the value of the welding current is large, which generates a large amount of spatter and degrades the welding quality. According to the present embodiment, the feed speed starts to change from the reverse-feeding peak value to the forward-feeding peak value at the time when the first delay period has elapsed since the start of the peak rise period, and starts to change from the forward-feeding peak value to the base period forward-feeding value at the time when the second delay period has elapsed since the start of the peak fall period. Since the transfer timing of a droplet can be delayed by providing the first delay period and the second delay period as described above, the occurrence of a short circuit caused by the transfer of the droplet can be shifted into the base period. When a short circuit occurs during the base period, the value of the welding current is small, which makes it possible to suppress the occurrence of spatter and improve the welding quality.

More preferably, according to the present embodiment, when the welding voltage setting value is larger than the reference voltage setting value, the feed speed of the welding wire starts to change from the reverse-feeding peak value to the forward-feeding peak value at the time earlier than the start point of the peak rise period by a first early period, and starts to change from the forward-feeding peak value to the base period forward-feeding value at the time earlier than the start point of the peak fall period by a second early period. When the welding voltage setting value is larger than the reference voltage setting value, the arc length is long, which may cause a short circuit to occur near the end of the base period. In such a case, the short circuit continues until the peak period in the next cycle, and is cleared while the value of the welding current is large. As a result, a large amount of spatter occurs and the welding quality is deteriorated. According to the present embodiment, the feed speed starts to change from the reverse-feeding peak value to the forward-feeding peak value at the time earlier than the start point of the peak rise period by the first early period, and starts to change from the forward-feeding peak value to the base period forward-feeding value at the time earlier than the start point of the peak fall period by the second early period. Since the transfer timing of a droplet can be advanced by providing the first early period and the second early period as described above, the occurrence of a short circuit caused by the transfer of the droplet can be shifted into the early stage of the base period. When a short circuit occurs in the early stage of the base period, the short circuit is cleared during the base period. This makes it possible to suppress the occurrence of spatter and improve the welding quality.

More preferably, according to the present embodiment, Each of the first delay period, the second delay period, the first early period, and the second early period is set to a larger value as the absolute value of the difference between the welding voltage setting value and the reference voltage setting value increases. In this way, a short circuit occurs in the early stage of the base period regardless of the magnitude of the welding voltage setting value. This makes it possible to suppress the occurrence of spatter whether the arc length is set to be short or long depending on the welding voltage setting value.

REFERENCE NUMERALS

1: welding wire 2: base material 3: arc 4: welding torch 5: feed roll DV: drive circuit Dv: drive signal DVR: voltage fine adjustment circuit Dvr: voltage fine adjustment signal EI: current error amplification circuit Ei: current error amplification signal EV: voltage error amplification circuit Ev: voltage error amplification signal FAD: feed speed average value detection circuit Fad: feed speed average value detection signal FAR: feed speed average value setting circuit Far: feed speed average value setting signal FC: feed control circuit Fc: feed control circuit signal FR: feed speed setting circuit Fr: feed speed setting signal Fw: feed speed IAR: welding current average value setting circuit Iar: welding current average value setting signal Ib: base current Ibr: base current setting signal IBS: short-circuit period base current setting circuit Ibs: short-circuit period base current setting signal IC: current modulation circuit ID: welding current detection circuit Id: welding current detection signal Ik: peak fall current Ip: peak current Ipr: peak current setting signal IR: welding current setting circuit Ir: welding current setting signal Iu: peak rise current Iw: welding current MC: power control circuit On: activation signal PS: welding power supply RC: robot control device SD: short-circuit determination circuit Sd: short-circuit determination signal SLD: long short-circuit determination circuit Sld: long short-circuit determination signal Ta1: first early period TA1R: first early period setting circuit Ta1r: first early period setting signal Ta2: second early period TA2R: second early period setting circuit Ta2r: second early period setting signal Tb: base period TBR: base period setting circuit Tbr: base period setting signal Td1: first delay period TD1R: first delay period setting circuit Td1r: first delay period setting signal Td2: second delay period TD2R: second delay period setting circuit Td2r: second delay period setting signal Tfk: feed speed fall period TFKR: feed speed fall period setting circuit Tfkr: feed speed fall period setting signal Tfu: feed speed rise period TFUR: feed speed rise period setting circuit Tfur: feed speed rise period setting signal Tk: peak fall period TKR: peak fall period setting circuit Tkr: peak fall period setting signal Tm: timer signal Tp: peak period TPR: peak period setting circuit Tpr: peak period setting signal Tu: peak rise period TUR: peak rise period setting circuit Tur: peak rise period setting signal VAV: welding voltage averaging circuit Vav: welding voltage average value signal Vb: base voltage VD: welding voltage detection circuit Vd: welding voltage detection signal Vp: peak voltage VR: welding voltage setting circuit Vr: welding voltage setting signal VSR: reference voltage setting circuit Vsr: reference voltage setting signal Vw: welding voltage Wb: base period forward-feeding value Wbr: base period forward-feeding value setting signal WC: feed speed modulation circuit WL: reactor WLR: long short-circuit reverse-feeding peak value setting circuit Wlr: long short-circuit reverse-feeding peak value setting signal WM: feed motor Wr: reverse-feeding peak value Wrr: reverse-feeding peak value setting signal Ws: forward-feeding peak value Wsr: forward-feeding peak value setting signal

**Claims**

1. A method for controlling pulse arc welding, the method comprising:

   feeding a welding wire forward and backward;
   providing a peak rise current that rises from a value of a base current to a value of a peak current during a peak rise period;
   providing the peak current during a peak period;
   providing a peak fall current that falls from the value of the peak current to the value of the base current during a peak fall period;
   providing the base current during a base period;
   repeating providing the respective currents as one pulse cycle; and
   performing arc length control based on a welding voltage setting value,
   wherein a feed speed of the welding wire is set to:

      a forward-feeding peak value during the peak period;
      a base period forward-feeding value during the base period to generate a short circuit, the base period forward-feeding value being smaller than the forward-feeding peak value; and
      a reverse-feeding peak value when the short circuit occurs, wherein the reverse-feeding peak value is maintained after the short circuit is cleared.

2. The method according to claim 1, wherein a start of the peak rise period is delayed until the short circuit is cleared.

3. The method according to claim 1 or 2, wherein when the welding voltage setting value is equal to a reference voltage setting value, the base period is set to a reference base period; when the welding voltage setting value is smaller than the reference voltage setting value, the base period is set to be longer than the reference base period; and when the welding voltage setting value is larger than the reference voltage setting value, the base period is set to be shorter than the reference base period.

4. The method according to claim 1 or 2, wherein at least one of the forward-feeding peak value, the base period forward-feeding value and the reverse-feeding peak value is subjected to modulation control such that an average value of the feed speed is set to a predetermined value.

5. The method according to claim 1 or 2, wherein the value of the base current is smaller during a period of the short circuit than during a period in which an arc is generated.

6. A pulse arc welding power supply configured to:

   feed a welding wire forward and backward;
   provide a peak rise current that rises from a value of a base current to a value of a peak current during a peak rise period;
   provide the peak current during a peak period;
   provide a peak fall current that falls from the value of the peak current to the value of the base current during a peak fall period;
   provide the base current during a base period;
   repeat providing the respective currents as one pulse cycle; and
   perform arc length control based on a welding voltage setting value,
   wherein a feed speed of the welding wire is set to:

      a forward-feeding peak value during the peak period;
      a base period forward-feeding value during the base period to generate a short circuit, the base period forward-feeding value being smaller than the forward-feeding peak value;
      a reverse-feeding peak value when the short circuit occurs, wherein the reverse-feeding peak value is maintained after the short circuit is cleared.

FIG.1

FIG.2

FIG.3

Europäisches Patentamt

European Patent Office

Office européen des brevets

# EUROPEAN SEARCH REPORT

**Application Number**

EP 25 20 5439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 119 274 A1 (FRONIUS INT GMBH [AT]) 18 January 2023 (2023-01-18) | 1,2,6 | INV. B23K9/073 B23K9/09 B23K9/12 |
| A | * figure 2 * | 3,5 | |
| | ----- | | |
| X | US 2013/068744 A1 (MATSUI KAITO [JP] ET AL) 21 March 2013 (2013-03-21) | 1,2,4,6 | |
| A | * figure 2 * | 3,5 | |
| | ----- | | |
| X | US 2021/031293 A1 (FURUYAMA YUYA [JP] ET AL) 4 February 2021 (2021-02-04) * figure 4 * | 1,6 | |
| | ----- | | |

**TECHNICAL FIELDS SEARCHED (IPC)**

B23K

The present search report has been drawn up for all claims

| Place of search | Date of completion of the search | Examiner |
|---|---|---|
| Munich | 6 March 2026 | Caubet, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## EP 4 732 979 A1

# ANNEX TO THE EUROPEAN SEARCH REPORT
# ON EUROPEAN PATENT APPLICATION NO.

EP 25 20 5439

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2026

| Patent document cited in search report | | Publication date | Patent family member(s) | | Publication date |
|---|---|---|---|---|---|
| EP 4119274 | A1 | 18-01-2023 | CN | 117320830 A | 29-12-2023 |
| | | | EP | 4119274 A1 | 18-01-2023 |
| | | | EP | 4370274 A1 | 22-05-2024 |
| | | | JP | 7576717 B2 | 31-10-2024 |
| | | | JP | 2024525353 A | 12-07-2024 |
| | | | US | 11992904 B1 | 28-05-2024 |
| | | | WO | 2023285416 A1 | 19-01-2023 |
| US 2013068744 | A1 | 21-03-2013 | CN | 102933343 A | 13-02-2013 |
| | | | EP | 2716395 A1 | 09-04-2014 |
| | | | JP | 5408364 B2 | 05-02-2014 |
| | | | JP | WO2012164833 A1 | 23-02-2015 |
| | | | US | 2013068744 A1 | 21-03-2013 |
| | | | WO | 2012164833 A1 | 06-12-2012 |
| US 2021031293 | A1 | 04-02-2021 | CN | 111989182 A | 24-11-2020 |
| | | | EP | 3782756 A1 | 24-02-2021 |
| | | | JP | 7365598 B2 | 20-10-2023 |
| | | | JP | WO2019203162 A1 | 13-05-2021 |
| | | | US | 2021031293 A1 | 04-02-2021 |
| | | | WO | 2019203162 A1 | 24-10-2019 |

**REFERENCES CITED IN THE DESCRIPTION**

**Patent documents cited in the description**

- JP 6123069 B